# EUROPEAN PATENT APPLICATION

(11) **EP 2 456 055 A2**
(43) Date of publication of application: **23.05.2012**
(21) Application number: 11186647.1
(22) Date of filing: 26.10.2011
(51) Int. Cl.: H02K 33/06, H02K 33/16

(54) **Vibrating linear actuator**

(30) Priority: 18.11.2010 JP 2010257846
(71) Applicant: Panasonic Corporation, Osaka 571-8501 (JP)
(72) Inventor: Kanada, Kensaku, Kadoma-shi, Osaka 571-8686 (JP); Kobayashi, Noboru, Kadoma-shi, Osaka 571-8686 (JP); Shimizu, Hiroaki, Kadoma-shi, Osaka 571-8686 (JP)
(74) Representative: Appelt, Christian W.

(57) **Abstract**

A vibrating linear actuator 1 includes: an electromagnetic core block 2 having an electromagnet 4 which is energized to alternately form different magnetic poles; two magnetic blocks 10a, 10b which are located facing the electromagnetic core block 2 and are reciprocated relatively to the electromagnetic core block 2, each magnetic block 10a, 10b having a permanent magnet 12 attracting and repelling the magnetic poles formed by the electromagnet 4; and a joint spring portion 30 connecting the two magnetic blocks 10a, 10b together. The one joint spring portion 30 includes a plurality of spring pieces 33, 34. One ends 33a, 34a of the spring pieces 33, 34 are connected to one of the two magnetic blocks 10a and the other ends 33b, 34b thereof are connected to the other magnetic block 10b.

## Description

### CROSS REFERENCE TO RELATED APPLICATIONS

This application is based upon and claims the benefit of priority from prior Japanese Patent Application P2010-257846 filed on November 18,2010; the entire contents of which are incorporated by reference herein.

### BACKGROUND OF THE INVENTION

The invention relates to a vibrating linear actuator which can be used as a driving source for an electric razor, for example.

As disclosed in Japanese Patent Laid-open Publication No. 2005-354879 (hereinafter referred to as Patent Literature 1), for example, one of known conventional vibrating linear actuators is a vibrating linear actuator including: an electromagnetic core block having an electromagnet; two magnetic blocks each including a permanent magnet facing the electromagnet; and a pair of right and left joint spring portions connecting the two magnetic blocks.

In Patent Literature 1, the two magnetic blocks are connected by the joint spring portion by connecting one end of a belt-shaped spring piece which is curved in a substantially C-shape to one of the magnetic blocks and connecting the other end thereof to the other magnetic block. At reciprocation of the pair of magnetic blocks, the spring force of the joint spring portions acts in such a direction that the amplitude of the pair of magnetic blocks is limited. The pair of magnetic blocks therefore is reciprocated with a predetermined amplitude.

### SUMMARY OF THE INVENTION

Meanwhile, in order to increase the spring constant of each joint spring portion, the circumferential length of the spring piece needs to be increased. Thus, the use of one spring piece curved in a substantially C-shape such as in the aforementioned conventional technique has a problem in that the joint spring portions are increased in size when it is attempted to increase the spring constant of the joint spring portions.

Accordingly, in some propositions, the joint spring portion is prevented from increasing in size while the spring constant is prevented from decreasing by meandering a spring piece.

However, when the spring piece has a meandering shape as is in the aforementioned conventional technique, the joint spring portion includes some arc portions that have small curvature radii. Thus, when the joint spring portion is miniaturized while the spring constant is prevented from decreasing, stress is concentrated on the arc portions with small curvature radii, which could shorten the product lifetime.

Accordingly, an object of the present invention is to provide a vibrating linear actuator which can increase in product life and can be miniaturized while the spring constant is prevented from being reduced.

In order to achieve the aforementioned object, a vibrating linear actuator includes: an electromagnetic core block including an electromagnet which is energized to alternately form different magnetic poles; a plurality of magnetic blocks which are located facing the electromagnetic core block and are reciprocated relatively to the electromagnetic core block, each magnetic block having a permanent magnet attracting and repelling the magnetic poles formed by the electronic core block; a plurality of elastic supporting portions reciprocably supporting each of the magnetic blocks; and at least one joint spring portion connecting the plurality of magnetic blocks together. The one joint spring portion includes a plurality of spring pieces, and each of the spring pieces has one end connected to one of the plurality of the magnetic blocks and the other end connected to another of the plurality of magnetic blocks.

### BRIEF DESCRIPTION OF THE DRAWINGS

Fig. 1 is a perspective view of a vibrating linear actuator according to a first embodiment of the invention.
Fig. 2 is a front view of the vibrating linear actuator according to the first embodiment of the invention.
Fig. 3 is a side view of the vibrating liner actuator according to the first embodiment of the invention.
Fig. 4 is a cross-sectional view taken along a line A-A of Fig. 3.
Fig. 5 is a side view showing a joint spring portion according to the first embodiment of the invention.
Fig.6 is a side view showing a joint spring portion according to a first modification of the first embodiment of the invention.
Figs. 7 (a) and 7 (b) show joint spring portions according to a second modification of the first embodiment of the invention, Fig. 7(a) being a side view showing a joint spring portion including two spring pieces, Fig. 7 (b) being a side view showing a joint spring portion including three spring pieces.
Figs. 8(a) to 8(c) show joint spring portions according to a third modification of the first embodiment of the invention, Fig. 8(a) being a side view showing a joint spring portion including two spring pieces, Fig. 8 (b) being a side view showing a joint spring portion including three spring pieces, Fig. 8 (c) being a side view showing a joint spring portion including four spring pieces.

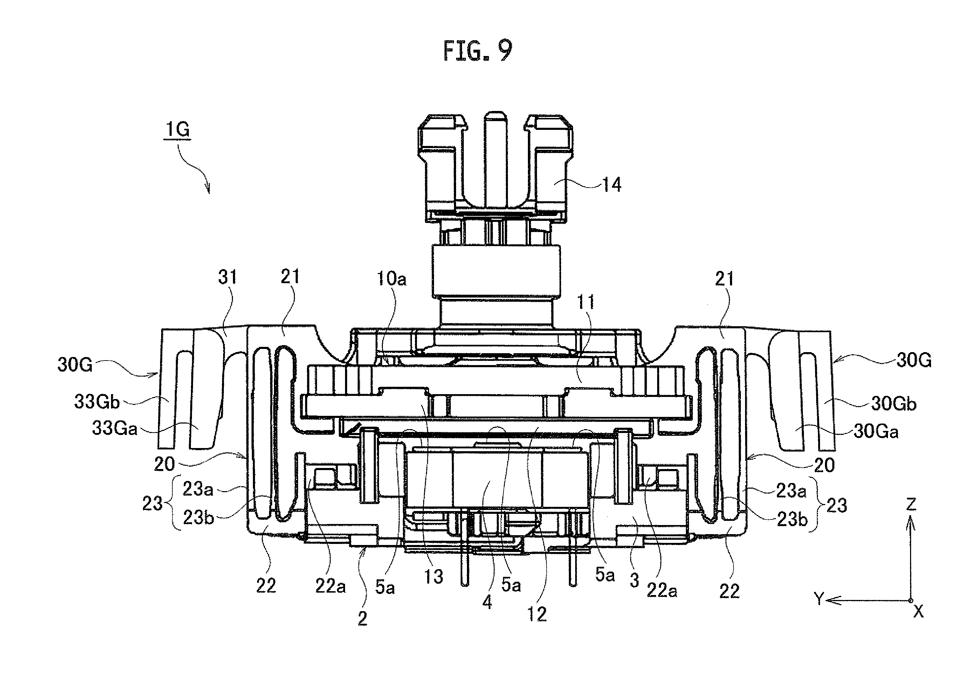

Fig. 9 is a front view of a vibrating linear actuator according to a second embodiment of the invention.

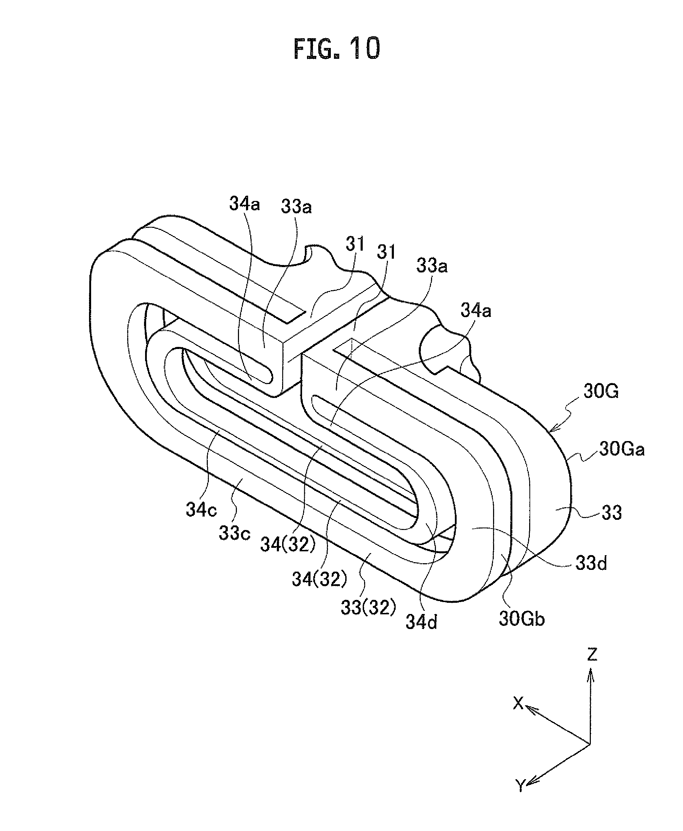

Fig. 10 is a perspective view showing a joint spring portion according to the second embodiment of the invention.
Figs. 11(a) and 11(b) show joint spring portions according to a first modification of the second embodiment of the invention, Fig. 11(a) being a side view showing a joint spring portion including three spring pieces, Fig. 11(b) being a side view showing a joint spring portion including four spring pieces.

### DETAILED DESCRIPTION OF THE PREFERRED EMBODIMENTS

Hereinafter, embodiments of the invention are described in detail with reference to the drawings. The following embodiments include the same constituent components. Accordingly, those same constituent components are given the same reference numerals, and redundant description is omitted.

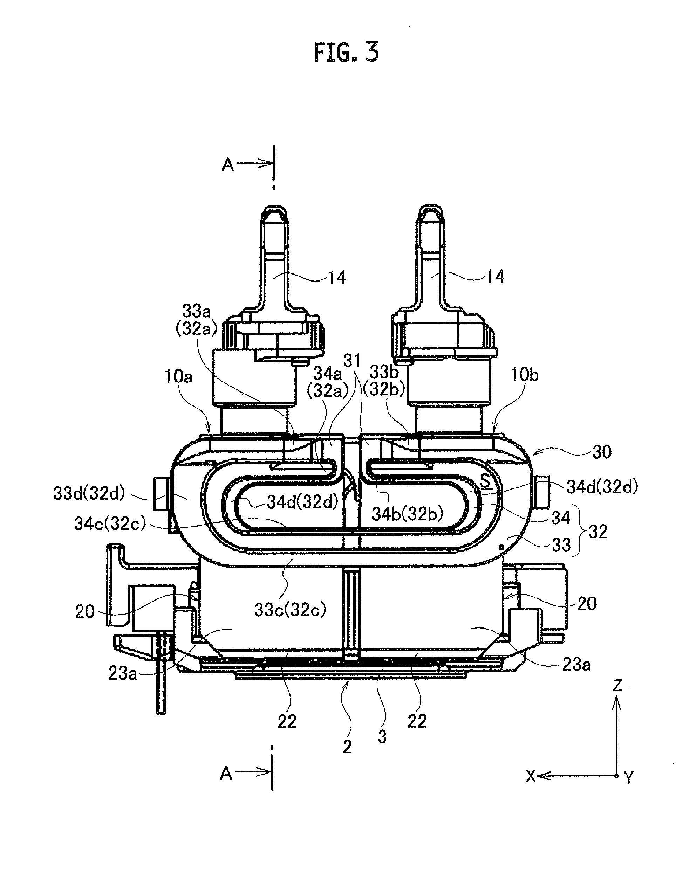

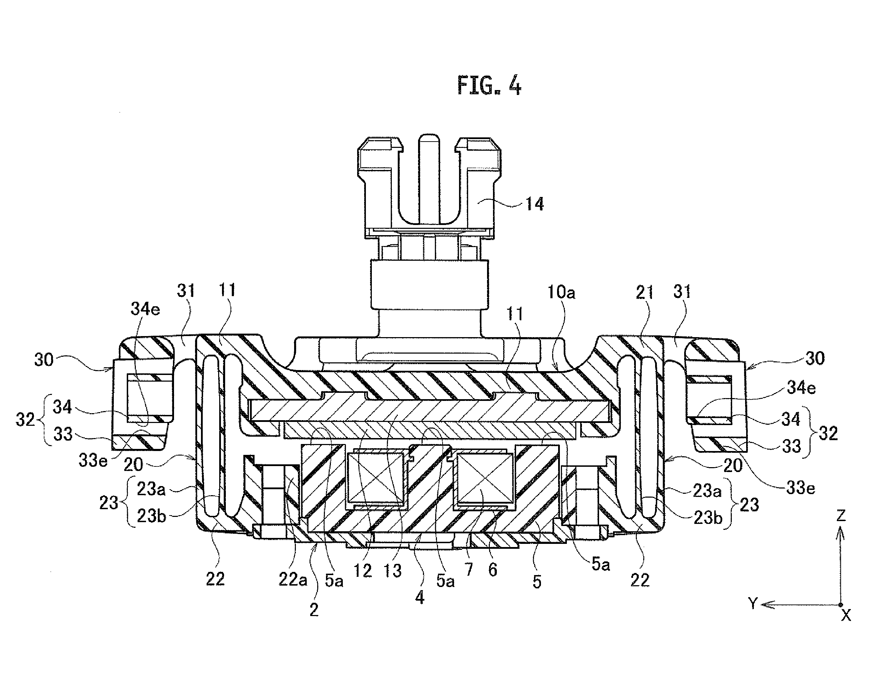

In the following description, the direction in which a plurality of magnetic blocks are arranged is referred to as a front-back direction (magnetic block arrangement direction) X; the direction in which the plurality of magnetic blocks reciprocate is referred to as a right-left direction (magnetic block moving direction) Y; and the direction in which an electromagnet and a permanent magnet face each other (the direction orthogonal to the front-back direction X and right-left direction Y) is referred to as a vertical direction Z. For the sake of convenience, the left side in Fig. 3 is the front in the front-back direction X, the left side of Fig. 4 is the left side in the right-left direction Y, and the upper side of Fig. 4 (the side in which the permanent magnet is located in the direction that the electromagnet and permanent magnet face each other) is the upper side in the vertical direction Z.

### (First Embodiment)

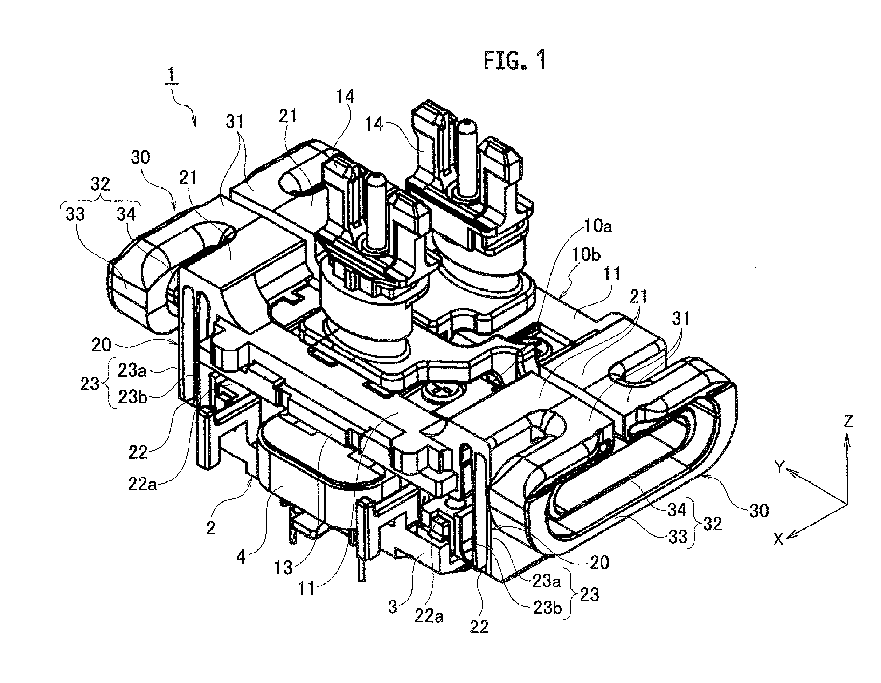

As shown in Figs. 1 to 4, a vibrating linear actuator 1 according to a first embodiment includes: an electromagnetic core block 2 including an electromagnet 4; two magnetic blocks (a plurality of magnetic blocks) 10a and 10b having permanent magnets 12 which face the electromagnet 4; two pairs of joint plates 20 as elastic supporting portions configured to respectively connect the magnetic blocks 10a and 10b to the electromagnetic core block 2; and a pair of right and left joint spring portions (at least one joint spring portion) configured to connect the two magnetic blocks 10a and 10b (connect the plurality of magnetic blocks) together.

The electromagnetic core block 2 has a base plate 3 made of synthetic resin. The base plate 3 is fixed to the electromagnet 4. The electromagnet 4 includes a core 5 as a magnetic body and a coil 7 wound around the core 5 with an insulating bobbin 6 interposed therebetween. The coil 7 is energized by current supplied alternately in different directions (alternate current). The magnetic surfaces 5a of the electromagnet 4 are positioned so as to face permanent magnets 12 of the two magnetic blocks 10a and 10b.

The pair of magnetic blocks 10a and 10b is arranged side by side in the front-back direction X with a gap therebetween. Each of the magnetic blocks 10a and 10b includes a holder portion 11 made of synthetic resin, one of the permanent magnets 12, and a magnetic back yoke 13. On the upper surface of each holder portion 11, a driving element 14 is fixed by screws, for example. If this vibrating linear actuator 1 is applied to the driving source for an electric razor, each driving element 14 is connected to an inner blade (not shown).

Each of the magnetic blocks 10a and 10b is located so as to be independently reciprocated in the reciprocating direction (right-left direction) Y due to deformation of the pair of joint plates 20. The permanent magnets 12 of the magnetic blocks 10a and 10b are located facing the magnetic pole faces 5a of the electromagnet 4 of the electromagnetic core block 1 with a predetermined gap therebetween by the joint plates 20. The permanent magnets 12 of the pair of magnetic blocks 10a and 10b are configured to have opposite polarities with respect to the magnetic pole faces 5a of the electromagnet 4 and to be subjected to electromagnetic forces acting oppositely to each other (attraction force and repulsion force). Accordingly, when the electromagnet 4 is energized, the pair of magnetic blocks 10a and 10b are subjected to moving forces opposite to each other in the reciprocating direction (right-left direction) Y. The back yoke 13 is located on the upper surface of the permanent magnet 12 (the surface of the permanent magnet 12 opposite to the electromagnet 4).

The pair of joint plates 20 is integrally formed with the holder portion 11. Each of the joint plates 20 is composed of an upper extension portion 21, a lower extension portion22, and an elastic plate portion 23 located between the upper and lower extension portions 22 and 23. The pair of upper extension portions 21 is fixed to both ends of the holder portion 11. Each lower extension portion 21 is provided with an attachment protrusion 22a. These attachment protrusions 22a are fixed to the base plate 3 of the electromagnetic core block 2 with screws, for example. Each of the magnetic blocks 10a and 10b is therefore supported to be hung by the corresponding pair of joint plates 20. The elastic plate portion 23 is composed of two spring plates 23a and 23b located in parallel with a distance therebetween. The two spring plates 23a and 23b are deformed to reciprocate the magnetic blocks 10a and 10b in the reciprocating direction (right-left direction) Y.

The pair of joint spring portions 30 is formed integrally with the joint plates 20 which are formed integrally with the holder portions 11. Specifically, in this embodiment, the pair of right and left joint spring portions 30 are connected to the magnetic blocks 10a and 10b with the joint plates (elastic support portions) 20 interposed therebetween, the joint plates 20 being formed on the both sides of the magnetic blocks 10a and 10b in the reciprocating direction (right-left direction) Y. At this time, as shown in Fig. 1, the pair of right and left joint spring portions 30 connects the magnetic blocks 10a and 10b together at the right and left sides of the magnetic blocks 10a and 10b.

As shown in Figs. 1 and 3, each joint spring portion 30 includes two joint bases (root portions) 31 and a spring piece unit 32 provided between the joint bases 31. The two joint bases 31 are fixed to the upper extension portion 21a of the joint plate 20 of the front magnetic block 10a and the upper extension portion 21a of the joint plate 20 of the rear magnetic block 10b.

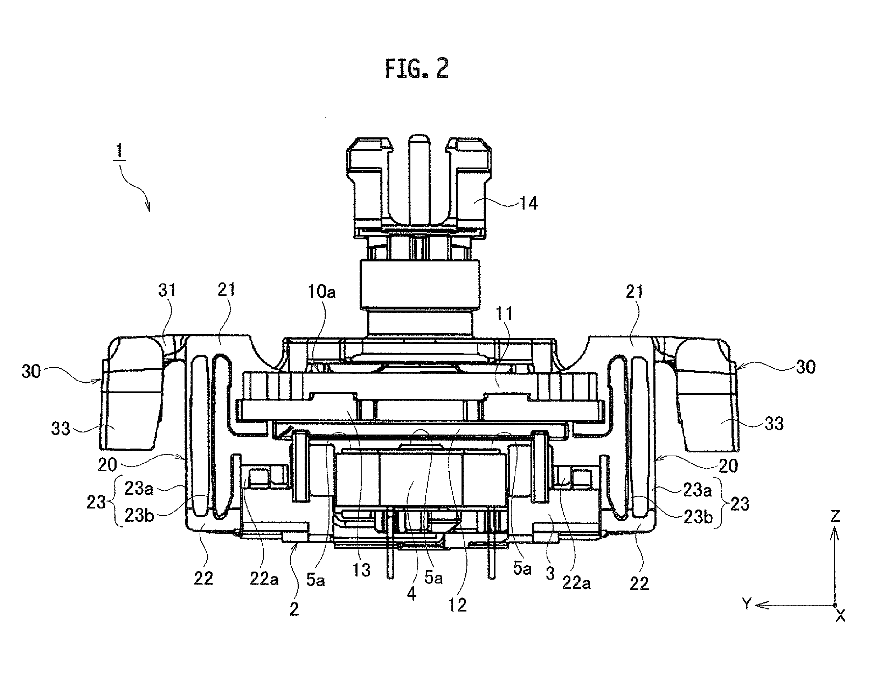

In this embodiment, as shown in Figs. 1 and 2, the two joint bases 31 of each joint spring portion 30 are protruded from the outer sides of the extension portions 21 in the reciprocating direction (right-left direction) Y outward in the reciprocating direction (right-left direction) Y.

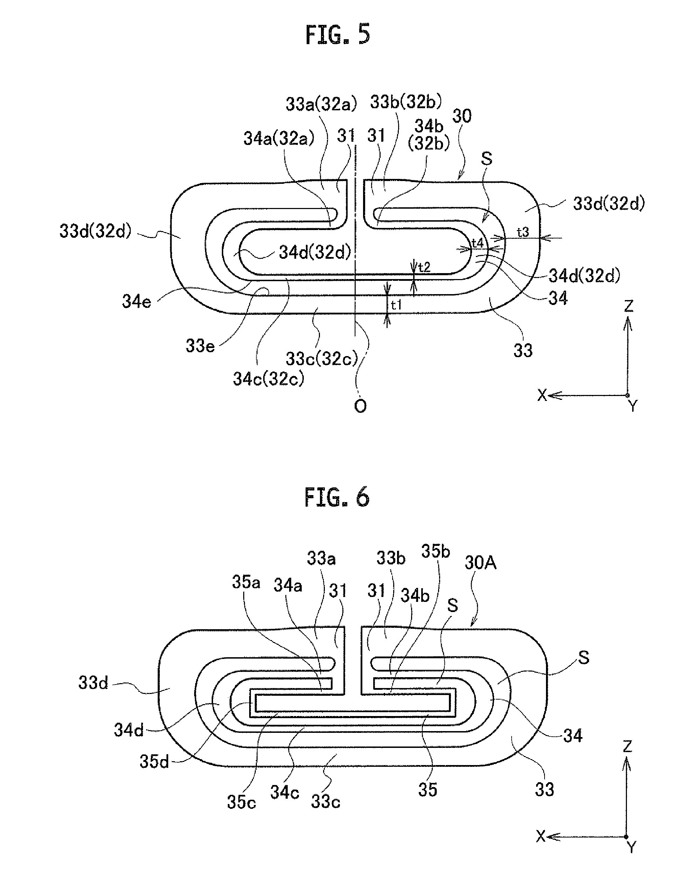

Moreover, each spring piece unit 32 is composed of a belt member curved in a substantially C shape. The both ends (front and rear ends 32a and 32b) of the belt-shaped spring piece unit 32 are respectively connected to the two joint bases 31. In this embodiment, the spring piece unit 32 has a shape curved in a substantially C shape opened upward in the vertical direction Z as shown in Figs. 3 and 5.

In particular, the belt-shaped spring piece unit 32 is formed such that its width direction substantially corresponds to the reciprocating direction (right-left direction) Y, is curved around a Y axis extending in the reciprocating direction (right-left direction) Y, and the both ends (front and rear ends 32a and 32b) of which are connected to the two joint bases 31 of the joint spring portion 30. The spring piece unit 32 is therefore formed so as to have a substantially C shape which is opened upward in the vertical direction Z when viewed in the reciprocating direction (right-left direction) Y. At this time, the front end 32a of the spring piece unit 32 is connected to the front of the joint base 31 which is connected to the front magnetic block 10a. The rear end 32b of the spring piece unit 32 is connected to the back of the joint base 31 which is connected to the rear magnetic block 10b (see Figs. 1 and 3).

In this embodiment, as shown in Figs. 3 and 5, the spring piece unit 32 includes a substantially plate-shaped torsion portion 32c in the bottom and flexure portions 32d and 32d. The torsion portion 32c is extended substantially in parallel to the front-back direction X. The flexure portions 32d and 32d are curved in substantially semicircular shapes and are extended upward from both front and rear ends of the torsion portion 32c.

In the aforementioned structure, the polarity formed in the magnetic pole faces 5a of the electromagnet 4 is alternated when current is supplied to the electromagnet 4 alternately in different directions. By the electromagnetic force due to the electromagnet 4 and permanent magnets 12, moving forces directed opposite to each other in the reciprocating direction (right-left direction) Y alternately act on the pair of magnetic blocks 10a and 10b. The pair of magnetic blocks 10a and 10b respectively reciprocates with a phase difference of 180 degrees by deformation of the pairs of joint plates 20.

When the pair of magnetic blocks 10 reciprocates, the spring piece units 32 of the joint spring portions 30 elastically deform. At this time, the pair of front and rear flexure portions 32d and 32d of each spring piece unit 32 are flexurally deformed in opposite phases in the reciprocating direction (right-left direction) Y. Along with the flexural deformation of the flexure portions 32d and 32d, the torsion portion 32c is torsionally deformed around the central axis extending in the front-back direction X with the front and rear ends directed in the opposite directions. In other words, halves of the joint spring portion 30 on front and rear sides of a centerline O between the pair of magnetic blocks 10a and 10b (see Fig. 5) elastically deform in opposite directions to generate spring forces. The spring force due to elastic deformation of the front half acts on the front magnetic block 10a, and the spring force due to elastic deformation of the rear half acts on the rear magnetic block 10b. At this time, the spring force generated by the elastic deformation (flexural and torsional deformations) of the spring piece unit 32 acts so as to limit the amplitude of the pair of magnetic blocks 10a and 10b. The amplitudes (resonant frequency) of the pair of magnetic blocks 10a and 10b can be set to desired values by setting the spring constant of the joint spring portions 30 to predetermined values.

Herein, in this embodiment, each joint spring portion (one joint spring portion) 30 is composed of a plurality of spring pieces. In other words, in this embodiment, each joint spring portion 30 includes a plurality of spring pieces. Specifically, as shown in Fig. 5, the joint spring portion 30 includes, as the spring piece unit 32, an outer spring piece 33 and an inner spring piece 34, which are located at the outer peripheral and the inner peripheral sides, respectively, when viewed in the reciprocating direction (right-left direction) Y.

In the outer and inner spring pieces 33 and 34 (a plurality of spring pieces), the front ends (ends) 33a and 34a are connected to the front magnetic block (one of the plurality of magnetic blocks) 10a, and the rear ends (the other ends) 33b and 34b are connected to the rear magnetic blocks (one of the other magnetic blocks) 10b.

In this embodiment, as shown in Fig. 5, each of the outer and inner spring pieces 33 and 34 is formed so that a front half (on one side) and a rear half (on the other side) are substantially symmetrical to each other about the centerline O between the pair of magnetic blocks 10a and 10b.

In this embodiment, the outer and inner spring pieces 33 and 34 (a plurality of spring pieces) are connected to the two joint bases 31 so as to form a dual (multiple) structure when viewed in the reciprocating direction (right-left direction) Y.

In other words, the plurality of spring pieces are arranged in a dual (multiple) fashion so as to have the innermost spring piece (the inner spring piece 34 in the embodiment) and the outermost spring piece (the outer spring piece 33 in this embodiment).

To be specific, the outer and inner spring pieces 33 and 34 (a plurality of spring pieces) arranged so as to overlap in the circumferential direction and the reciprocating direction (right-left) direction Y when viewed along a plane (an XZ·plane in this embodiment) perpendicular to the reciprocating direction (right-left direction) Y that the magnetic blocks 10a and 10b reciprocate. At this time, there is a space S formed between the outer and inner spring pieces 33 and 34 (between the spring pieces adjacent to each other). The space S is closed when viewed in the reciprocating direction (right-left direction) Y as shown in Fig. 5.

In this embodiment, the plurality of spring pieces are arranged in a multiple fashion so as to have spaces between the adjacent ones thereof as described above.

Furthermore, in this embodiment, in the outer and inner spring pieces 33 and 34 (a plurality of spring pieces), the front ends (ends) 33a and 34a are provided side by side for the joint base (common joint base) 31 connected to the front magnetic block (one of the magnetic blocks) 10a. The rear ends (the other ends) 33b and 34b are provided side by side for the joint base (common joint base) 31 connected to the rear magnetic block (the other magnetic block) 10b.

In this embodiment, the front ends 33a and 34a of the outer and inner spring pieces 33 and 34 (a plurality of spring pieces) are connected side by side to the joint base (the joint base connected to the front magnetic block 10a) 31 as the common root portion. Furthermore, the rear ends 33b and 34b of the outer spring pieces 33 and 34 (a plurality of spring pieces) are connected side by side to the joint base (the joint base connected to the rear magnetic block 10b) 31 as the common root portion.

Accordingly, the both ends of each of the spring pieces 33 and 34 are connected to the front magnetic block 10a and rear magnetic block 10b through the joint bases 31 as the common root portion.

In this embodiment, the front end 33a of the outer spring piece 33 is connected to the joint base 31 connected to the front of the front magnetic block 10a, and the rear end 33b of the outer spring piece 33 is connected to the back of the joint base 31 connected to the rear magnetic block 10b (see Figs. 1 and 3). Moreover, the front end 34a of the inner spring piece 34 is connected to the joint base 31 connected to the front of the front magnetic block 10a, and the rear end 34b of the inner spring piece 34 is connected to the joint base 31 connected to the back of the rear magnetic block 10b (see Figs. 1 and 3).

The front end 33a of the outer spring piece 33 and the front end 34a of the inner spring piece 34 are connected to the joint bases 31 so that the front end 33a of the outer spring piece 33 is positioned above the front end 34a of the inner spring piece 34. The rear end 33b of the outer spring piece 33 and the rear end 34b of the inner spring piece 34 are connected to the joint bases 31 so that the rear end 33b of the outer spring piece 33 is positioned above the rear end 34b of the inner spring piece 34.

In other words, both ends (front ends 33a and 34a, rear ends 33b and 34b) of the outer and inner spring pieces 33 and 34 (a plurality of spring pieces) are consecutively located on the respective joint bases 31 at predetermined intervals in the vertical direction Z.

The both ends of the outer and inner spring pieces 33 and 34 are continuously provided for the joint bases 31, so that the space S formed between the outer and inner spring pieces 33 and 34 is closed when viewed from in the reciprocating direction (right-left direction) Y.

Furthermore, in this embodiment, as shown in Fig. 5, the outer and inner spring pieces 33 and 34 (a plurality of spring pieces) are formed so that the inner spring piece (the spring piece located inside) 34 is made thinner than that of the outer spring piece (the spring piece located outside) 33.

To be specific, thickness t2 of the torsion portion 34c of the inner spring piece 34 in the vertical direction Z is smaller than thickness t1 of the torsion portion 33c of the outer spring piece 33 in the vertical direction Z. In other words, the area of the cross section (cut in the right-left direction Y) of the torsion portion 34c of the inner spring piece 34 is smaller than the area of the cross section (cut in the right-left direction Y) of the torsion portion 33c of the outer spring piece 33.

When the cross-sectional area of the torsion portion 34c inside is made smaller than that of the torsion portion 33c outside as described above, the polar moment of area of the torsion portion 34c inside is smaller than that of the torsion portion 33c outside, and the torsional rigidity of the torsion portion 34c inside can be made smaller. This allows the torsion portion 34c inside to be torsionally deformed more easily than the torsion portion 33c outside.

In this embodiment, moreover, thickness t4 of the flexure portion 34d of the inner spring piece 34 in the front-back direction X is smaller than thickness t3 of the flexure portion 33d of the outer spring piece 33 in the front-back direction X.

When the cross-sectional area of the flexure portion 34d inside is made smaller than that of the flexure portion 33d outside, the second moment of area of the inner flexure portion 34d about the Y axis in the right-left direction Y is smaller than the second moment of area of the outer flexure portion 33d about the axis Y in the right-left direction Y. Accordingly, the inner flexure portion 34d can be flexurally deformed in the right-left direction more easily than the outer flexure portion 33d.

Meanwhile, when the magnetic blocks 10a and 10b reciprocate in the right-left direction in the case where both ends of the outer and inner spring pieces 33 and 34 (front ends 33a and 34a and rear ends 33b and 34b) are connected to the common joint bases 31, the inner and outer spring pieces 33 and 34 are displaced by a substantially same amount. If the inner flexure portion 34d is configured to be flexurally deformed more easily than the outer flexure portion 33d and the inner torsion portion 34c is configured to be torsionally deformed more easily than the outer torsional portion 33c, stress caused within the inner spring piece 34 can be smaller than stress caused within the outer spring piece 33 when the outer and inner spring pieces 33 and 34 are displaced by a same amount.

In this embodiment, by setting the inner spring piece (spring piece positioned inside) 34 thinner than the outer spring piece (spring piece positioned outside) 33, the inner spring piece 34 can be prevented from being subjected to excessive stress.

The spring constant of the outer spring piece (spring piece positioned outside) 33 is thus larger than that of the inner spring piece (spring piece positioned inside) 34. Accordingly, the spring constant of the entire joint spring portion can be set mainly based on the outer spring piece (spring piece positioned outside) 33.

At this time, the thickness of the inner spring piece (spring piece positioned inside) 34 should be set to such a thickness that the inner spring piece 34 is not subjected to excessive stress and the predetermined spring constant can be obtained. This can prevent that the outer spring piece 33 has excessively large spring constant in order for the entire joint spring portion 30 to have a desired spring constant. In other words, it is possible to prevent that the outer spring piece 33 is excessively thick and that the lifetimes of the joint spring portion 30 and the vibrating linear actuator 1 are shortened.

In this embodiment, furthermore, the outer and inner spring pieces 33 and 34 (at least two of the plurality of spring pieces) have substantially similar shapes.

To be specific, as shown in Fig. 5, the outer and inner spring pieces 33 and 34 are formed so that the profile of an inner surface 33e of the belt-shaped outer spring piece 33 is substantially concentric with the profile of an outer surface 34e of the belt-shaped inner spring piece 34 when viewed in the right-left direction. In short, the belt-shaped inner spring piece 34 is formed along the inner surface of the belt-shaped outer spring piece 33. In this embodiment, the outer and inner spring pieces 33 and 34 are arranged so that the distance between the inner and outer surfaces 33e and 34e (width of space formed when viewed in the right-left direction) is substantially uniform at least in the torsion portions 33c and 34c.

In this embodiment, moreover, the joint spring portion 30 is integrally molded using synthetic resin to be formed integrally with the pair of magnetic blocks 10a and 10b through the joint plates 20. The joint spring portion 30 may be connected to the pair of magnetic blocks 10a and 10b by making the joint spring portion 30 of metal and welding the same to the pair of magnetic blocks 10a and 10b (joint plates 20). In other words, the joint spring portion does not need to be made of synthetic resin and may be made of another material such as metal. Moreover, the joint spring portion does not need to be integrally molded with the joint plates (magnetic blocks). The joint spring portion may be separately formed and connected to the joint plates by welding or the like.

By setting the spring constant of the joint spring portion 30 to a predetermined constant, the amplitude of the pair of magnetic blocks 10a and 10b can be set to a desired value.

For example, in order to reduce the amplitude of the magnetic blocks 10a and 10b, the spring constant of the joint spring portion 30 is designed to increase. This allows the joint spring portion 30 to apply a predetermined spring force to the magnetic blocks 10a and 10b even with small elastic deformation (flexural deformation and torsional deformation) thereof. Accordingly, the amplitude of the magnetic blocks 10a and 10b can be reduced. In contrast, in order to increase the amplitude of the magnetic blocks 10a and 10b, the spring constant of the joint spring portion 30 is designed to decrease. Accordingly, the joint spring portion 30 needs large elastic deformation (flexural deformation and torsional deformation) to apply the predetermined spring force to the magnetic blocks 10a and 10b. The amplitude of the magnetic blocks 10a and 10b can be therefore increased.

As described above, in this embodiment, the front ends (ends) 33a and 34a of the outer and inner spring pieces 33 and 34 (a plurality of spring pieces) formed in each joint spring portion 30 are connected to the front magnetic block (one of the plurality of magnetic blocks) 10a, and the rear ends (the other ends) 33b and 34b thereof are connected to the rear magnetic block (another of the plurality of magnetic blocks) 10b.

Accordingly, it can be prevented that arc portions with small curvature radii are formed in each spring piece (outer and inner spring pieces 33 and 34) even if the joint spring portion 30 is miniaturized. This can prevent that stress is concentrated on the joint spring portion 30 to shorten the product lifetime. Moreover, since the one joint spring portion 30 includes the outer and inner spring pieces 33 and 34 (a plurality of spring pieces), the spring constant of the joint spring portion 30 can be prevented from decreasing even if the joint spring portion 30 is miniaturized. As described above, according to this embodiment, it is possible to obtain the vibrating linear actuator 1 capable of increasing in lifetime and being miniaturized with the reduction of the spring constant being prevented.

Moreover, since the one joint spring portion 30 is composed of the outer and inner spring pieces 33 and 34 (a plurality of spring pieces), compared to an one-stroke shaped spring piece of the joint spring portion which is employed in a conventional vibrating linear actuator, each spring piece can be made thinner. Accordingly, it is possible to reduce stress caused in the spring pieces and facilitate adjustment of the spring constant.

In this embodiment, furthermore, the outer and inner spring pieces 33 and 34 are configured to have shapes including the substantially plate-shaped torsion portions 33c and 34c extending substantially in parallel to the front-rear direction X in the bottoms and the flexure portions 33d and 34d which are curved in substantially semicircular shapes and are extended upward from both front and rear ends of the torsion portions 33c and 34c, respectively. In short, the outer and inner spring pieces 33 and 34 include the substantially plate-shaped torsion portions 33c and 34c extending substantially in parallel to the front-rear direction X in the bottoms, respectively.

It is therefore possible to minimize the formation of small curvature radii in each spring piece 33 and 34 while reducing the thickness of the spring pieces 33 and 34 in the vertical direction Z. According to this embodiment, the vibrating linear actuator 1 can be therefore miniaturized in the vertical direction Z.

In this embodiment, moreover, the joint spring portion 30 is connected to the magnetic blocks 10a and 10b by integral molding or welding. Accordingly, the vibrating liner actuator 1 can be miniaturized.

In this embodiment, moreover, both ends of the spring pieces 33 and 34 (front ends 33a and 34a and rear ends 33b and 34b) are connected to the front and rear magnetic blocks 10a and 10b through the joint bases 31 as the common root portions. The joint spring portion 30 includes the plurality of joint bases 31 individually connected to the magnetic block 10a (one of the magnetic blocks) and the magnetic block (one of the other magnetic blocks) 10b, and the front ends (ends) 33a and 34a of the spring piece 33 and 34 are provided side by side for the joint base 31 connected to the magnetic block 10a, and the rear ends (other ends) 33b and 34b thereof are provided side by side for the joint base 31 connected to the magnetic block 10b.

In such a manner, by connecting both ends of the spring pieces 33 and 34 to the common joint bases 31, it can be prevented that stress is concentrated on both ends of each spring piece 33 and 34 compared to the case where both ends of each spring piece are connected to the magnetic blocks through different joint bases (for example, the front ends 33a and 34a are connected through different joint bases). Accordingly, it is possible to further prevent the joint spring portion 30 from being broken by stress concentration on both ends of the spring piece 33 and 34 when the magnetic blocks 10a and 10b are reciprocated.

In this embodiment, the outer and inner spring pieces 33 and 34 (a plurality of spring pieces) are arranged in a dual (multiple) fashion so as to include the innermost spring piece (inner spring piece 34) and the outermost spring piece (outer spring piece 33). Accordingly, it is possible to prevent formation of dead space in the arrangement of the plurality of spring pieces . The vibrating linear actuator 1 can be therefore miniaturized.

In this embodiment, in particular, the outer and inner spring pieces 33 and 34 (a plurality of spring pieces) are arranged so as to overlap in the circumferential direction and in the reciprocating direction (right-left directions) Y when viewed along a plane (the XZ plane in this embodiment) perpendicular to the reciprocating direction (right-left direction) Y of the magnetic blocks 10a and 10b. Accordingly, it is possible to prevent the vibrating linear actuator 1 from being wide in the right-left direction. The vibrating liner actuator 1 can be therefore miniaturized in the right-left direction.

Meanwhile, the shorter the circumferential length of the spring piece of the joint spring portion, the smaller area the stress can be released to, and the more difficult to relax the stress caused in the inner spring pieces.

However, in this embodiment, the outer and inner spring pieces 33 and 34 (a plurality of spring pieces) are formed so that the spring piece positioned inside (inner spring piece 34) has a smaller thickness than the spring piece positioned outside (outer spring piece 33). By making the inner spring piece (spring piece positioned inside) 34 thinner than the outer spring piece (spring piece positioned outside) 33, the inner spring piece (spring piece positioned inside) 34 can be elastically deformed (flexurally and torsionally deformed) more easily than the outer spring piece (spring piece positioned outside) 33. Accordingly, the stress caused in the inner spring piece (spring piece inside) 34 can be relaxed, and the lifetime of the vibrating liner actuator 1 can be increased.

In this embodiment, moreover, the outer and inner spring pieces 33 and 34 (at least two of the plurality of spring pieces) have substantially similar shapes. Accordingly, it is possible to prevent formation of dead space in an arrangement of the plurality of spring pieces. The vibrating linear actuator 1 can be therefore miniaturized.

Next, a description is given of modifications of the joint spring portion according to the first embodiment.

### (First Modification)

Fig. 6 shows a first modification of the joint spring portion. A joint spring portion 30A according to the first modification has the substantially same configuration as that of the joint spring portion 30 shown in the first embodiment and includes the inner spring piece 33 and outer spring piece 34.

Herein, the joint spring portion 30A according to the first modification differs from the joint spring portion of the first embodiment mainly in that each joint spring portion 30A includes three spring pieces.

Specifically, in this modification, a second inner spring piece 35 as the innermost spring piece is formed on the inside of the inner spring piece 33. Front ends 33a, 34a, and 35a of the three spring pieces 33, 34, and 35 are provided side by side at intervals in the vertical direction Z for one of the joint bases 31 as a common root portion, and rear ends 33b, 34b, and 35b thereof are provided side by side at intervals in the vertical direction Z for the other joint base 31 as a common root portion.

The spring pieces 33, 34, and 35 include torsion portions 33c, 34c, and 35c in the bottoms, respectively. Each of the torsion portions 33c, 34c, and 35c has a substantially plate shape extending substantially in parallel to the front-rear direction X. The spring pieces 33 and 34 respectively include the flexure portions 33d and 34d which are curved in substantially semicircular shapes and are extended upward from both front and rear ends of the torsion portions 33c and 34c. The spring piece 35 includes flexure portions 35d substantially linearly extended upward from both front and rear ends of the torsion portion 35c.

In this modification, furthermore, the outer and inner spring pieces 33 and 34 (at least two of the plurality of spring pieces) have substantially similar shapes. The flexure portions 35d of the spring piece 35 may be curved in a substantially semicircular shape so that the three spring pieces 33 to 35 have substantially similar shapes.

In this modification, the spring piece inside is configured to have a smaller thickness than the spring piece outside thereof. In other words, the spring pieces 33 to 35 are provided in descending order of thickness (thickness of the torsion portion and flexure portions) from the outside to the inside.

Moreover, the spring pieces 33 to 35 are arranged so that spaces S are formed between the outer and inner spring pieces 33 and 34 and between the inner and second inner spring pieces 34 and 35. The spaces S are closed when viewed in the reciprocating direction (right-left direction) Y.

According to the aforementioned modification, it is possible to provide the substantially same operations and effects as those of the aforementioned first embodiment.

According to this modification, in which the joint spring portion includes a triple structure, it is possible to effectively use space within the inner spring piece 33. Accordingly, the spring constant can be set higher than that of the joint spring portion of a dual structure while the vibrating linear actuator 1 can be prevented from increasing in size. Moreover, if the spring constant is set equal to that of the joint spring portion of a dual structure, each spring piece of this modification can be made thinner. Accordingly, the lifetime can be further increased, and the joint spring portion can be further miniaturized.

Even if the joint spring portion 30A of the first modification is applied to the vibrating linear actuator 1, similar to the first embodiment, the amplitude of the two magnetic blocks can be also adjusted through the joint spring portion 30A.

### (Second Modification)

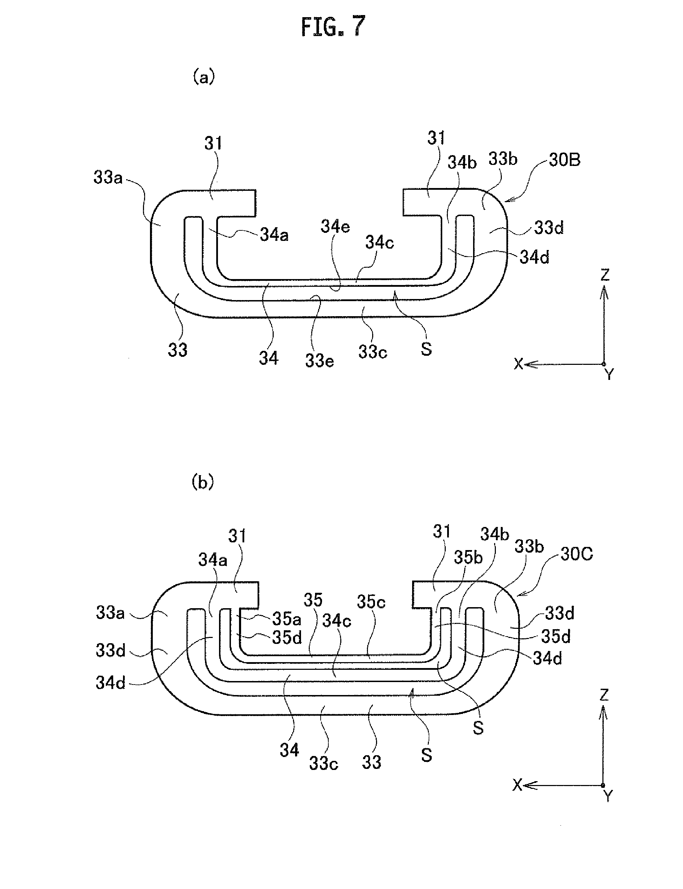

Figs. 7 (a) and 7 (b) show a second modification of the joint spring portion. Joint spring portions 30B and 30C according to the second modification have substantially the same structures as those of the joint spring portions 30 and 30A shown in the first embodiment and first modification. The joint spring portion 30B includes the outer and inner spring pieces 33 and 34, and the joint spring portion 30C includes the outer, inner, and the second inner spring portion 33, 34, and 35. Fig. 7(a) shows the joint spring portion 30B of a dual structure, and Fig. 7(b) shows the joint spring portion 30C of a triple structure.

Herein, the joint spring portions 30B and 30C according to this modification differ from the joint spring portions 30 and 30A of the aforementioned first embodiment and first modification mainly in that each of the spring pieces 33, 34, and 35 has a substantially U shape.

Specifically, the front ends 33a, 34a, and 35a of the spring pieces 33, 34, and 35 are connected to the bottom of the joint base 31 connected to the front magnetic block 10a, and the rear ends 33b, 34b, and 35b thereof are connected to the bottom of the joint base 31 connected to the rear magnetic block 10b (see Figs. 7(a) and 7(b)).

To be specific, the front ends 33a, 34a, and 35a of the spring pieces 33, 34, and 35 (a plurality of spring pieces) are provided side by side at intervals in the front-back direction X for the joint bases (joint base connected to the front magnetic block 10a) 31 as the common root portion. The rear ends 33b, 34b, and 34b thereof are provided side by side at intervals in the front-back direction X for the joint base (joint base connected to the rear magnetic block 10b) 31 as the common root portions.

The spring piece inside is configured to be thinner than the spring piece outside of the same. In other words, the spring pieces 33 to 35 are arranged in descending order of thickness (thicknesses of the torsion portion and flexure portion) from the outside to the inside.

In the second modification, furthermore, the spring pieces 33, 34, and 35 (at least two of the plurality of spring pieces) have substantially similar shapes.

The spring pieces 33 to 35 are arranged so that spaces S are formed between the outer and inner spring pieces 33 and 34 and between the inner and second inner spring pieces 34 and 35. The spaces S are closed when viewed in the reciprocating direction (right-left direction) Y.

According to the above second modification, it is possible to provide the substantially same operations and effects as those of the first embodiment and first modification.

Even when the joint spring portion 30A of the first modification is applied to the vibrating linear actuator 1, similar to the first embodiment, the amplitude of the two magnetic blocks can be adjusted through the joint spring portion 30A.

### (Third Modification)

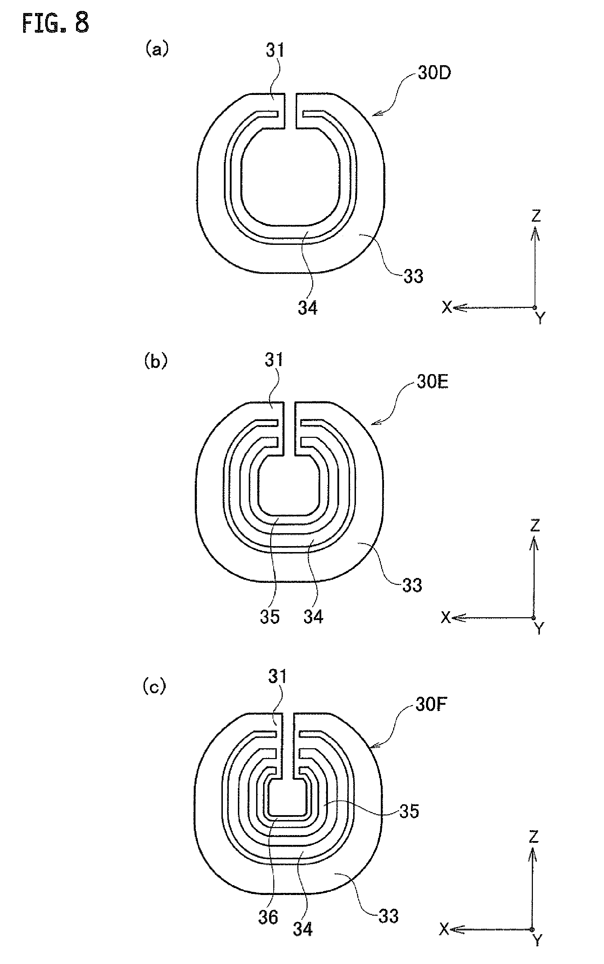

Figs. 8 (a) to 8 (c) show a third modification of the joint spring portion. Each of joint spring portions 30D, 30E, and 30F according to the third modification has the substantially same configuration as those of the joint spring portions 30, 30A, 30B, and 30C shown in the first embodiment and first and second modifications. Each of the joint spring portions 30D, 30E, and 30F includes the outer and inner spring pieces 33 and 34, and the joint spring portion 30E further includes the second inner spring piece 35. Fig. 8 (a) shows the joint spring portion 30D of a dual structure, Fig. 8 (b) shows the joint spring portion 30E of a triple structure, and Fig. 8 (c) shows the joint spring portion 30F of a quadruple structure (in which a third inner spring piece 36 as the innermost spring piece is formed on the inside of the second inner spring piece 35).

Herein, the joint spring portions 30D, 30E, and 30F according to the third modification differ from the joint spring portions 30, 30A, 30B, and 30C of the first embodiment and the first and second modifications mainly in that the spring pieces 33, 34, 35, and 36 are substantially circular. Specifically, each spring piece has a shape as shown in the conventional art and has a dimension larger than that of the joint spring portions 30, 30A, 30B, and 30C of the first embodiment and the first and second modifications in the vertical direction Z.

In this modification, the spring piece inside is thinner than the spring piece outside of the same.

In this modification, furthermore, the spring pieces 33, 34, 35, and 36 (at least two of the plurality of spring pieces) have substantially similar shapes.

According to the aforementioned third modification, it is possible to provide the substantially same effects as those of the first embodiment and the first and second modifications.

According to the third modification, compared to the conventional joint spring portion of a single structure, it is possible to increase the lifetime and miniaturize the joint spring portion with the reduction in the spring constant being prevented.

Even when the joint spring portions 30D, 30E, and 30F of the third modification are applied to the vibrating linear actuator 1, the amplitude of the two magnetic blocks can be adjusted through the joint spring portions 30D, 30E, and 30F similarly to the first embodiment and the first and second modifications.

This third modification shows not only the joint spring portion of a dual structure and a triple structure but also a quadruple structure by example. Such a joint spring portion of a quadruple structure can be also employed for the shapes shown in the first embodiment or the second modification. Moreover, each shape described above may have a multiple structure including five or more spring pieces.

If the joint spring portion is configured to have a multiple structure in such a manner, the joint spring portion and the vibrating linear actuator 1 can be miniaturized. Moreover, it is possible to increase the spring constant with size unchanged. For example, if the vibrating linear actuator 1 is used as an actuator driving razor blades of an electric razor, it is possible to adjust the resonant frequency according to the number of blades.

At this time, it is preferable that spring pieces are arranged in descending order of thickness from the outside to the inside. Specifically, it is preferable that the N-th spring piece from the outside of the multiple structure is made thinner than the (N-1)th spring piece. The thickness of the (N-1)th spring piece should be set to such a thickness that the (N-1)th spring piece is not subjected to excessive stress and the predetermined spring constant can be ensured. This can prevent that the N-th spring piece has excessively large spring constant in order for the entire joint spring portion 30 to have a desired spring constant. Accordingly, it can be prevented that the N-th spring piece is excessively thick. It is therefore possible to prevent the lifetimes of the joint spring portion and the vibrating linear actuator are shortened.

Moreover, if at least two of the spring pieces have substantially similar shapes, the vibrating linear actuator 1 can be miniaturized by efficiently using the inner space.

### (Second Embodiment)

A vibrating linear actuator 1G according to the second embodiment basically has a substantially same structure as that of the vibrating linear actuator 1 shown in the first embodiment.

The vibrating linear actuator 1G includes: an electromagnetic core block 2 having an electromagnet 4; two magnetic blocks 10a and 10b including permanent magnets 12 facing the electromagnet 4; two pairs of joint plates 20 as elastic supporting portions connecting the magnetic blocks 10a and 10b to the electromagnet core block 2; and a pair of right and left joint spring portions 30G connecting the two magnetic blocks 10a and 10b.

Herein, the vibrating linear actuator 1G according to the second embodiment differs from that of the vibrating linear actuator 1 mainly in that a plurality of spring piece units 32 of each joint spring portion 30G are provided side by side in the right-left direction Y.

Specifically, in this embodiment, the joint spring portions 30Ga and 30Gb, each of which has substantially a same shape as that of the joint spring portion 30 shown in the first embodiment, are attached side by side in the right-left direction Y.

The vibrating linear actuator 1G of the second embodiment includes two joint spring portions at each of the right and left ends of the magnetic blocks (joint spring pieces 30Ga and 30Gb) . Each of spring piece units 32 and 32 of the joint spring portions 30Ga and 30Gb includes an outer spring piece 33 and an inner spring piece 34. The outer spring piece 33 is positioned outside when viewed from the reciprocating direction (right-left direction) Y. The inner spring piece unit 32 is positioned inside and is thinner than the outer spring piece 33.

Front ends 33a and 34a of the spring pieces 33 and 34 are provided side by side for one of joint bases 31 as a common root portion at an interval in the vertical direction Z. Rear ends 33b and 34b of the spring pieces 33 and 34 are provided side by side for another one of the joint bases 31 as the common root portion at an interval in the vertical direction Z.

The spring pieces 33 and 34 include torsion portions 33c and 34c in the bottom and flexure portions 33d and 34d, respectively. The torsion portions 33c and 34c have substantially plate shapes extending substantially in parallel to the front-end direction X. The flexure portions 33d and 34d are curved in a substantially semicircular shape and are extended upward from both front and rear ends of the torsion portions 33c and 34c, respectively.

In the joint spring portions 30Ga and 30Gb, the front ends 33a and 33a of the spring pieces 33 and 33 are arranged side by side at an interval in the right-left direction Y and are connected to the common root portion. The rear ends 34a and 34a of the spring pieces 33 and 33 are arranged side by side at an interval in the right-left direction Y and are connected to the joint base 31 as the common root portion.

In such a manner, in this embodiment, both ends of the plurality of spring pieces (spring pieces 33 and 33 of the joint spring portions 30Ga and 30Gb and spring pieces 34 and 34 of the joint spring portions 30Ga and 30Gb) are arranged side by side at an interval in the right-left direction Y and are connected to the joint bases 31 as the common root portions.

Moreover, in this embodiment, the joint spring portions 30Ga and 30Gb are formed so that the joint spring portion 30Gb positioned outside in the right-left direction Y is thinner than the joint spring portion 30Ga positioned inside in the right-left direction Y.

According to the aforementioned embodiment, it is possible to provide the substantially same operations and effects as those of the first embodiment.

Next, a description is given of a modification of the joint spring portion according to the second embodiment.

### (First Modification)

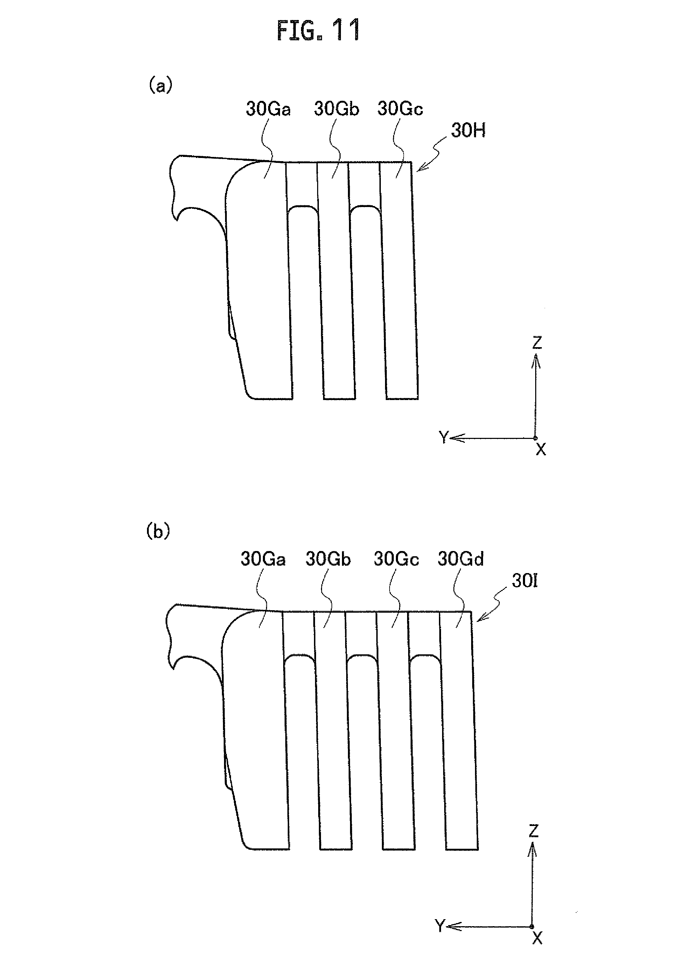

Figs. 11(a) and 11(b) show a first modification of the joint spring portion according to the second embodiment. Joint spring portions 30H and 301 according to the modification have the substantially same structure as that of the joint spring portion 30G of the second embodiment. The joint spring portions 30H and 301 include a plurality of joint spring portions 30Ga and 30Gb provided side by side in the right-left direction Y. The joint spring portions 30Ga and 30Gb have the substantially same shapes as that of the joint spring portion 30 shown in the first embodiment. Each of the joint spring portions 30Ga and 30Gb according to this first modification includes inner and outer spring pieces 33 and 34.

The joint spring portions 30H and 301 according to this modification differ from the joint spring portion 30G of the second embodiment mainly in that a plurality of joint spring portions 30Ga, 30Gb, 30Gc, and 30Gd are provided side by side in the right-left direction Y. Fig. 11(a) shows the joint spring portion 30H having a structure in which three joint spring portions are arranged in the right-left direction Y, and Fig. 11(b) shows the joint spring portion 30I having a structure in which four joint spring portions are arranged in the right-left direction Y.

According to the aforementioned modification, it is possible to provide the substantially same operations and effects as those of the second embodiment.

Even if the joint spring portions 30H and 30I of the first modification are applied, the amplitude of the two magnetic blocks can be adjusted through the joint spring portions 30H and 301 similar to the second embodiment.

In the examples of the second embodiment and first modification, two to four joint spring portions are provided side by side in the right-left direction Y. However, it is possible to provide five or more joint spring portions side by side in the right-left direction Y.

Moreover, each of the joint spring portions provided side by side in the right-left direction Y (joint spring portions 30Ga, 30Gb, and the like) may be composed of a spring piece having a single structure as shown in the conventional art.

In the joint spring portion according to the second embodiment, a plurality of joint spring portions (not only of a same shape but also of different shapes) may be properly selected from the joint spring portions including the spring pieces having the shapes shown in the above-described embodiments and modifications to be provided side by side in the right-left direction Y.

Hereinabove, the preferred embodiments of the invention are described. However, the invention is not limited to the above embodiments and can be variously modified.

For example, each of the above embodiments includes two magnetic blocks. However, the invention is applicable to the case including three or more magnetic blocks.

In the case where three magnetic blocks are provided side by side in the front-back direction, for example, the magnetic block on the front side is one of the plurality of magnetic blocks, and the magnetic block in the middle is one of the other magnetic blocks. The front and middle magnetic blocks are connected using the joint spring portions shown in each of the aforementioned embodiments and modifications. At this time, the other magnetic block on the rear side may be connected to the middle or front magnetic block using a joint spring portion of a single structure (the joint spring portion shown in the conventional art) or using the joint spring portion of a multiple structure shown in each of the embodiments and modifications.

Moreover, in the description of the embodiments, the electromagnetic core block including the electromagnet is fixed, and the magnetic blocks including permanent magnets are movable. However, the electromagnetic core block including the electromagnet may be moved with the magnetic blocks including permanent magnets being fixed. The electromagnetic core block including the electromagnet and the magnetic blocks including permanent magnets may be configured to be both movable. In this case, the electromagnetic core block constitutes one of the movable members, and the magnetic blocks constitute the other movable members.

Furthermore, in the examples of the aforementioned embodiments, the joint plates and joint spring portions are integrally molded with the holder portions of the magnetic blocks or are integrally formed by welding. The joint plates and joint spring portions may be formed separately from the holder portions of the magnetic blocks and may be fixed to the same using screws or the like.

Furthermore, in the examples of the above embodiments, the electromagnet is fixed directly to the base. However, the electromagnet may be fixed to the base with a spring member interposed therebetween.

The aforementioned vibrating linear actuators are preferably used as driving sources for electric razors but can be applied to other uses. Moreover, in the vibrating linear actuator used as the driving source of an electric razor, the inner blade may be reciprocated through a driving element, or the outer blade may be reciprocated using one of the plurality of magnetic blocks.

Moreover, in the examples of the aforementioned embodiments and modifications, both ends of each of the plurality of spring pieces are connected to the common joint base. However, the front and rear ends of at least one of the plurality of spring pieces may be connected to the front and rear magnetic blocks through another joint base. In short, it is not necessary to connect both ends of every spring portion to the common joint bases.

Moreover, detailed specifications (shapes, sizes, layouts, and the like) of the spring pieces, electromagnet core block, magnetic blocks, and others can be properly changed.

## Claims

1. A vibrating linear actuator, comprising:
an electromagnetic core block (2) having an electromagnet (4) which is energized to alternately form different magnetic poles;
a plurality of magnetic blocks (10a, 10b) which are located facing the electromagnetic core block (2) and are reciprocated relatively to the electromagnetic core block (2), each magnetic block having a permanent magnet (12) attracting and repelling the magnetic poles formed by the electromagnetic core block (2);
a plurality of elastic supporting portions (20) reciprocably supporting each of the magnetic blocks (10a, 10b); and
at least one joint spring portion (30, 30A - 30I) connecting the plurality of magnetic blocks (10a, 10b) together,
wherein the joint spring portion (30, 30A - 30I) is provided with a plurality of spring pieces (33, 34), and each of the spring pieces has its one end connected to one of the plurality of magnetic blocks and the other end connected to another of the plurality of magnetic blocks.

2. The vibrating linear actuator according to claim 1, wherein the joint spring portion (30, 30A - 301) is connected to the magnetic blocks (10a, 10b) by welding or integral molding.

3. The vibrating linear actuator according to claim 1 or 2, wherein
the joint spring portion (30, 30A - 301) is provided with a plurality of joint bases (31) which are respectively connected to the one of the magnetic blocks and another of the magnetic blocks, and wherein
the plurality of spring pieces have their one ends placed side by side at the joint base (31) connected to the one magnetic block, and the other ends placed side by side at the joint base (31) connected to another of the plurality of magnetic blocks.

4. The vibrating linear actuator according to one of claims 1 to 3, wherein
the plurality of spring pieces are multiply arranged to have an innermost spring piece and an outermost spring piece.

5. The vibrating linear actuator according to claim 4, wherein the plurality of spring pieces are arranged in descending order of thickness from the outside to the inside, such that a thickness of the innermost spring piece is thinner than a thickness of the outermost spring piece.

6. The vibrating linear actuator according to claim 5, wherein at least two of the plurality of spring pieces have substantially similar shapes.
